# EUROPÄISCHE PATENTANMELDUNG

(11) **EP 1 437 213 A1**
(43) Veröffentlichungstag der Anmeldung: **14.07.2004**
(21) Anmeldenummer: 03405886.7
(22) Anmeldetag: 11.12.2003
(51) Int. Cl.: B29C 59/04, B31F 1/07

(54) **Vorrichtung zum Satinieren und Prägen von Flachmaterial**

(30) Priorität: 23.12.2002 CH 22062002
(71) Anmelder: Boegli-Gravures S.A., CH-2074 Marin (CH)
(72) Erfinder: Boegli, Charles, 2074 Marin-Epagnier (CH)
(74) Vertreter: AMMANN PATENTANWAELTE AG BERN

(57) **Zusammenfassung**

Die Vorrichtung zum Satinieren und Prägen von Flachmaterial weist eine Prägewalze und mindestens eine Gegenwalze auf, wobei die Walzen mit einem Antrieb verbunden und einzeln oder gemeinsam antreibbar sind und die Walzen nachgiebig gegeneinander anpressbar sind und die einzelnen Zähne abgeflacht sind, und die Prägezähne derart ausgebildet sind, dass sie beim Durchlauf des Flachmaterials (9) an diesen Stellen geprägte Zeichen erzeugen, deren Erscheinungsbild sich je nach Blickwinkel des Betrachters und/oder Art und/oder Standort der Beleuchtungsquelle ändert, wobei die, die sich ändernden Zeichen erzeugenden Prägezähne eine andere geometrische Form und/oder Oberfläche aufweisen als die für die Satinierung vorgesehenen Satinier-Zähne. Dazu sind die Oberfläche der Prägezähne (2S1 - 2S6; 2M1 - 2M3) und/oder Stellen des Zahngrundes (ZG) mit Mikro-Strukturierungen (20-22, 26 - 33; 23 - 25) versehen.

Mit dieser Mikro-Strukturierung ist es möglich, weitgehendst fälschungssichere Zeichen zu erzeugen, die auch sehr dekorativ wirken können.

## Beschreibung

Die vorliegende Erfindung bezieht sich auf eine Vorrichtung zum Satinieren und Prägen von Flachmaterial, insbesondere Verpackungsfolien, auf mit der Vorrichtung hergestellte Verpackungsfolien sowie auf ein Verfahren zum Betrieb der Vorrichtung.

Eine solche Vorrichtung ist aus der WO 02/30661 des gleichen Anmelders bekannt. Darin ist offenbart, dass zur Erzeugung von Zeichen auf den satinierten Untergrund mit Standortund/oder Lichtquellen abhängigen optischen Effekten, die es dadurch auch erlauben, Sicherheitsmerkmale zu erzeugen, die sehr schwer zu kopieren sind, Zähne verwendet werden, die eine von den satinierenden Zähnen abweichende geometrische Form und/oder Oberfläche aufweisen. Während geometrische Abweichungen der Zahnformen und -höhe offenbart sind, die allesamt im Makrobereich von 30 - 100 µm (Mikrometer) liegen, sind in dieser Schrift keine näheren Angabe bezüglich Oberflächengestaltung der Zähne und des Zahngrundes enthalten.

In der WO 02/076716 des gleichen Anmelders sind Vorrichtungen zur Behandlung von Flachmaterial offenbart, bei der eine Prägewalze mit einzelnen Zähnen entweder mit einer zweiten, gleichgezahnten Gegenwalze und einer Gegenwalze, die keine einzelnen Zähne aufweist oder nur mit einer Walze, die keine einzelnen Zähne aufweist, zusammenwirkt. Damit können besonders präzise Prägungen für die oben beschriebenen Effekte erreicht werden.

Die in der EP-B-925 911 des gleichen Anmelders beschriebene Vorrichtung zum Satinieren einer Folie, die auf Erkenntnisse früherer Patente des gleichen Anmelders beruht, enthält zwei Walzen, die gegenseitig beweglich angeordnet sind, derart, dass beim Ineinandergreifen der Zähne der Walzen ein selbststabilisierender Effekt auftritt, wodurch eine hohe Durchlaufgeschwindigkeit einerseits und eine grosse Präzision andererseits erzielt wird. Dadurch entsteht vor allem ein gleichmässiges Satinieren und bei entsprechender Bearbeitung von Zähnen eine sehr präzise Prägung von Folien.

In der EP-A2-0 194 042 ist ein geprägter Gegenstand offenbart, auf dessen Substrat erste und zweite nicht lichtbeugende Relief-Elemente aufgeprägt sind, die erste und zweite Muster definieren und wobei die Muster gleichförmig reflektieren und sich deren Ansicht beim Wechseln des Sichtwinkels ändern. In der Beschreibung werden nur Linienmuster erwähnt und es ist keine gleichzeitige Satinierung vorgesehen.

Es ist von diesem Stand der Technik ausgehend Aufgabe der vorliegenden Erfindung eine Vorrichtung zum Satinieren anzugeben, die es erlaubt, eine grössere Vielfalt von optischen Zeichen zu prägen, die bessere Fälschungssicherung und Dekorationseffekte ermöglichen.

Diese Aufgabe wird mit der Vorrichtung gemäss Anspruch 1 gelöst. Weitere Vorteile und Merkmale sind in den abhängigen Ansprüchen definiert.

Die Erfindung wird im folgenden anhand von Zeichnungen von Ausführungsbeispielen näher erläutert.
- Figur 1: zeigt eine Prägewalze und eine Gegenwalze in einer sogenannten Pin up-Pin down Konfiguration,
- Figur 2: zeigt eine Anordnung von drei synchronisierten Walzen,
- Figur 3: zeigt ein Synchronisationsgetriebe für die Anordnung von Figur 2,

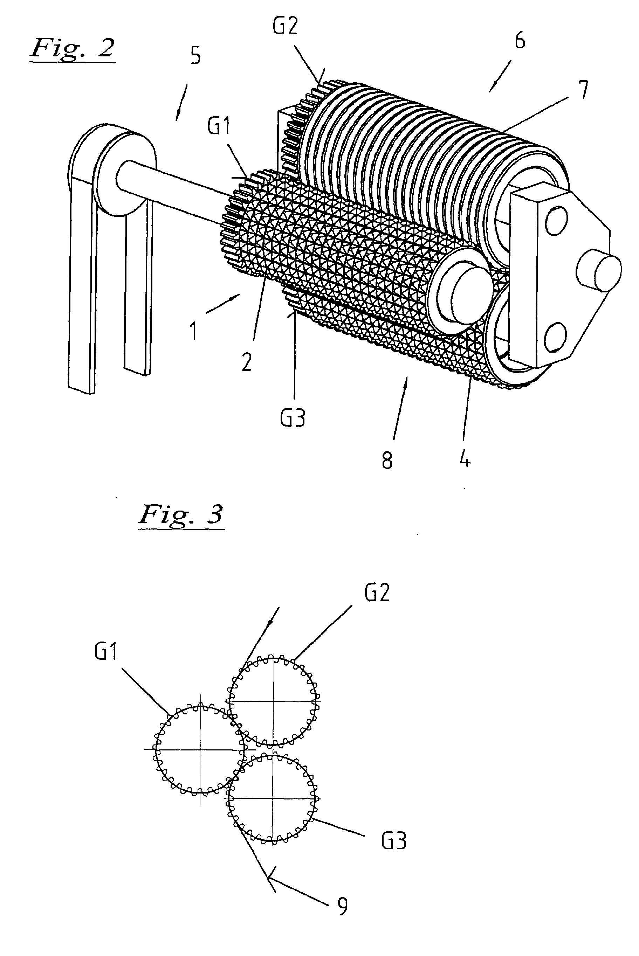

- Figur 2A: zeigt eine Ausführungsvariante zu Figur 2,

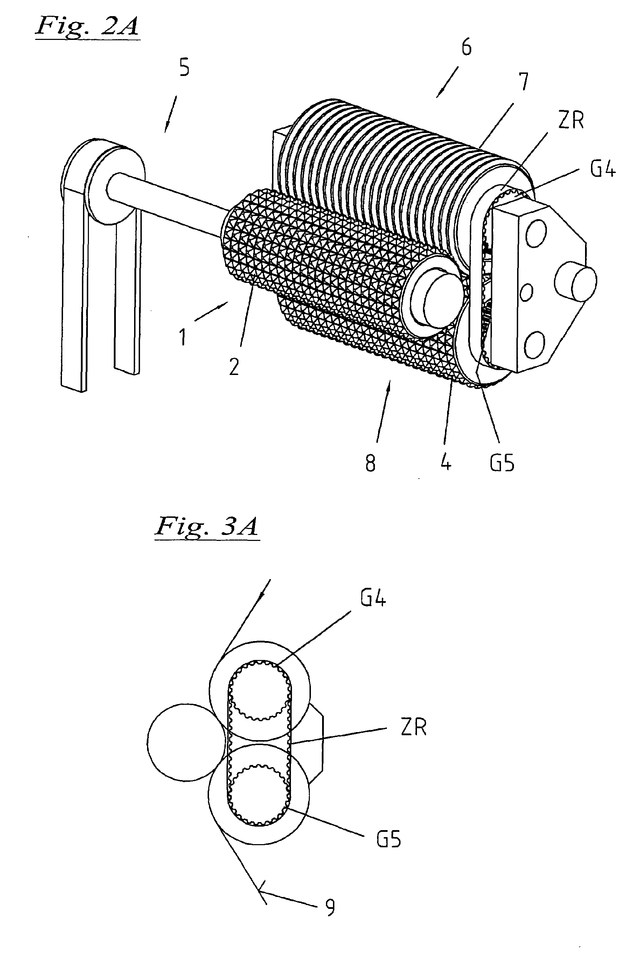

- Figur 3A: zeigt eine Synchronisation zwischen den Gegenwalzen mit einem Zahnriemen,

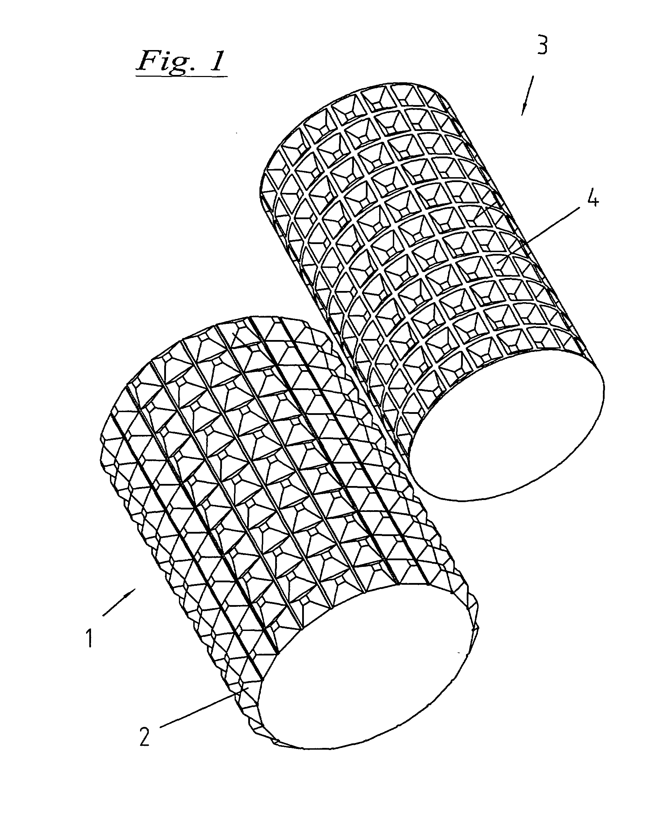

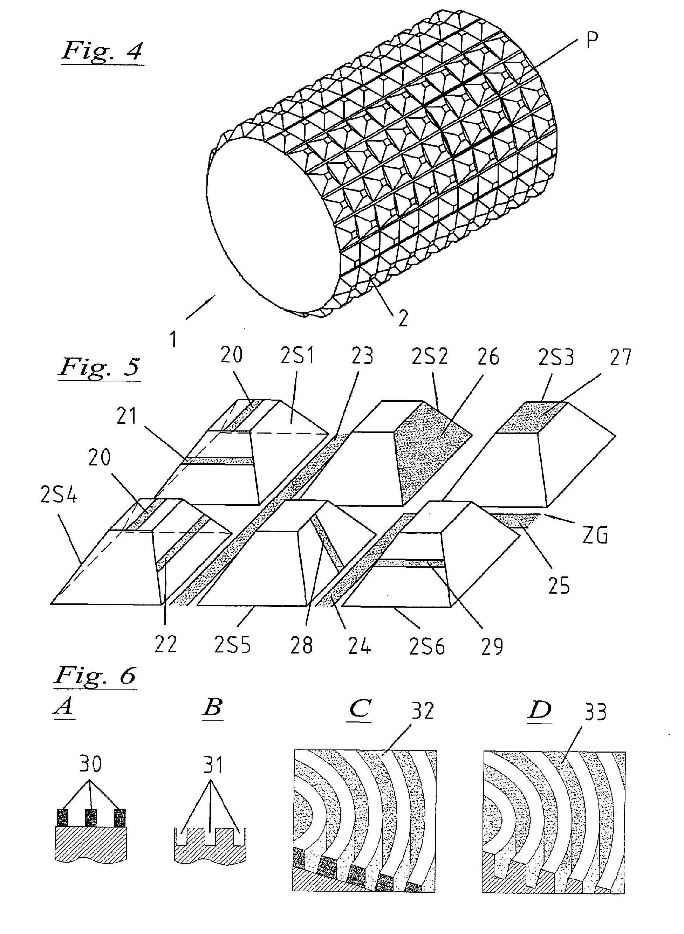

- Figur 4: zeigt in einem vergrösserten Massstab einen Ausschnitt aus der Prägewalze in Figur 1,
- Figur 5: zeigt eine weitere Ausschnittsvergrösserung von Figur 4, mit Mikro-Strukturierungen an den Zähnen,
- Figur 6: zeigt, in einem noch grösseren Massstab, verschiedene mögliche Mikro-Strukturen der Zahnoberfläche von Figur 5,

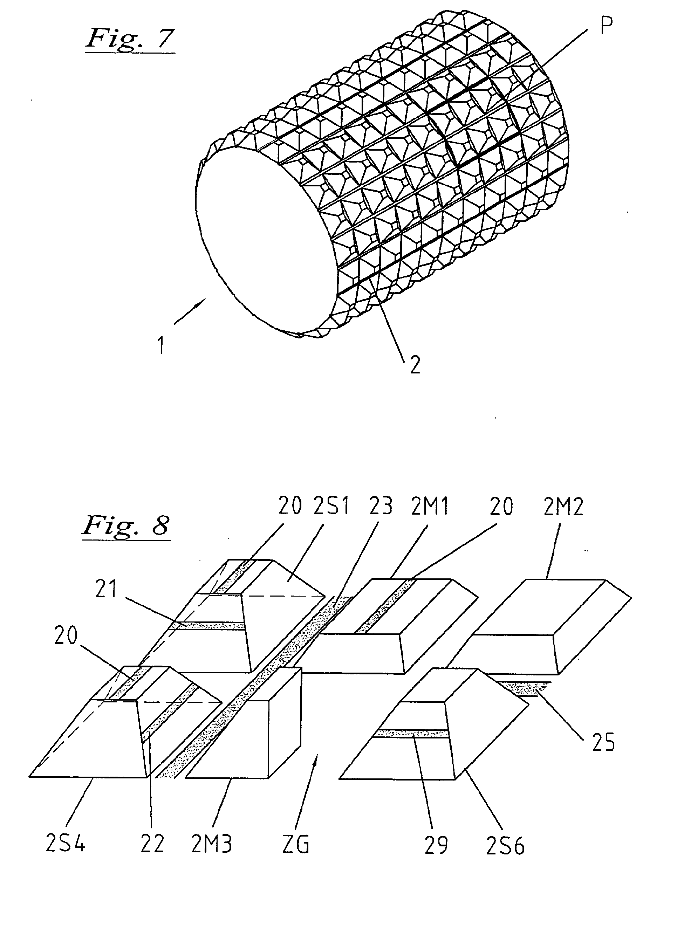

- Figur 7: zeigt den gleichen Prägewalzenteil wie in Figur 4,
- Figur 8: zeigt eine Variante zu Figur 5, mit Makro-Strukturen an und Mikro-Strukturierungen auf den Zähnen,

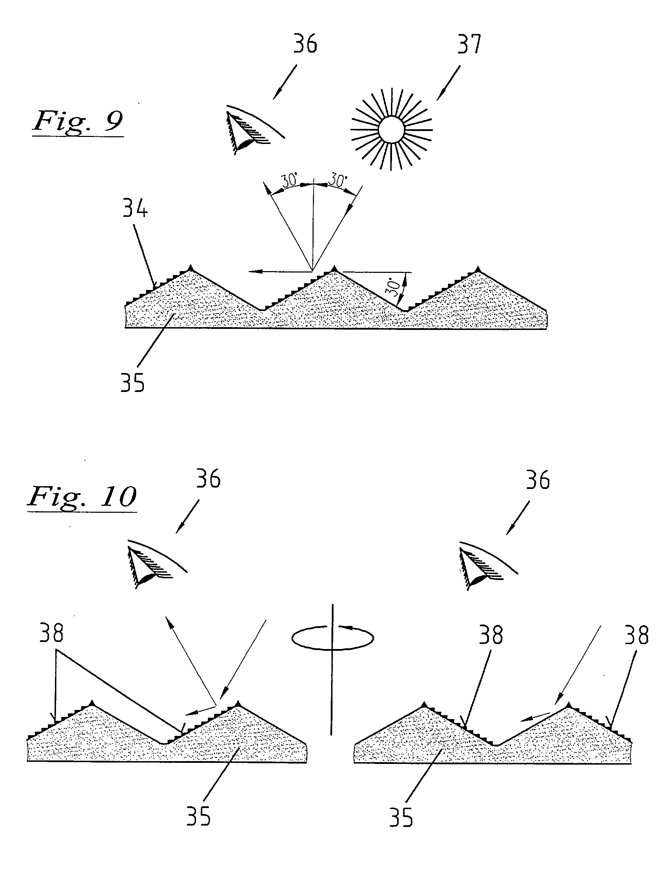

- Figur 9: ist eine Prinzipdarstellung einer Folie, die mit den Mikro-Strukturierungen gemäss den Figuren 5 und 8 geprägt worden ist,
- Figur 10: stellt die Ausgangslage sowie die um 180° gedrehte Lage einer strukturierten Folie dar,

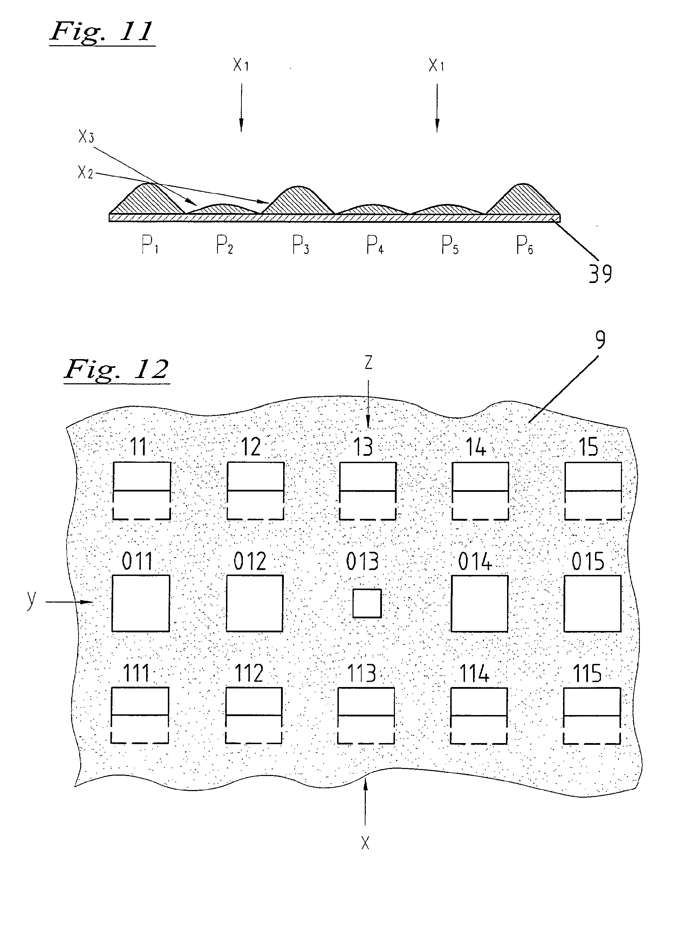

- Figur 11: ist ein Schnitt einer geprägten Oberfläche einer Folie, und
- Figur 12: ist eine schematische Draufsicht einer geprägten Oberfläche einer Folie mit einer Vielzahl von effektbildenden Prägungen.

Beim Satinieren von Aluminium-kaschiertem Papier oder von metallisierten Folien oder von sogenannten metallisierten Innerliner für die Verpackung von Tabakwaren oder Lebensmittel wie Schokolade, im folgenden der Einfachheit halber "Folie" genannt, wird die Oberfläche mit einem sehr feinen, regelmässigen Raster im Millimeter- und Submillimeterbereich versehen, bei welchem Aussparungen oder unsatinierte Stelle vorgesehen sind. Während der diffus strahlende satinierte Teil den bekannten seidenen Glanz erzeugt, wird der spiegelnde, unsatinierte Teil der Oberfläche für Logos, Schriftzüge oder dergleichen verwendet. An diesen Stellen wäre es einfach möglich, Merkmale zur Sicherung der Authentizität anzubringen.

Bei den eingangs genannten Anmeldungen sind Verfahren vorgeschlagen worden, bei welchen dem Satinierungsvorgang ein zweiter Vorgang überlagert wird, welcher im zum prägenden Medium schwer kopierbare Sicherheitsmerkmale erzeugt, wobei die Erzeugung dieser Sicherheitsmerkmale auf der bis dahin bekannten geometrischen Dimension der Dicke des Faserteils der Folien, im Bereich von 100 µm, beruht.

Die derart makroskopisch erzeugten optischen Effekte müssen stets im Bezug zu der sie umgebenden, grossen satinierten Flächen gesehen werden. Solange die beschriebenen Prägevorrichtungen optisch wirksame Geometrien im Bereich von 100 µm erzeugen, entstehen die in der Physik bekannten Reflektions- und Beugeerscheinungen. Die hierbei erzeugbaren Kontrastverhältnisse sind naturgemäss in Richtung Abdeckung oder Abdunklung beschränkt, da sich die Fasern des Prägematerials nur beschränkt zu Hindernissen im Strahlenweg abwinkeln lassen. Dabei wird im Idealfall von total reflektierenden Reliefmustern gesprochen.

Nachfolgend wird die Erfindung dahingehend erläutert, dass bei der Entwicklung einer im mikroskopischen Bereich wirksamen Prägevorrichtung und durch optimale Nutzung von Druck- und anderen beim Prägen wirksamen Parametern festgestellt werden kann, dass die einem Satinierprozess überlagerbaren Muster hervorragende Sicherheitsmerkmale erzeugen. Dazu werden die von der Optik her bekannten Gitter auf geeignete Weise auf die Prägezähne aufgebracht und die zu prägende Seite der Folie damit bearbeitet.

Dabei entstehen erfindungsgemässe Prägungen durch positive, d.h. gegenüber der Oberfläche der Zähne erhabene, oder negative Gitterstrukturen mit einem Gitterabstand von unter einem µm (Mikrometer) bis zu ca. 30 µm. Diese Gitterstrukturen können je nach Anordnung auf dem Prägematerial nichtfarbige, interferenzartige Mikro-Strukturen mit vielen Beugungsordnungen oder farbige, hologrammähnliche Erscheinungsbilder erzeugen. Der erzeugbare Kontrast, d.h. der sogenannte Beugungswirkungsgrad, kann dabei sehr hoch werden, da metallische Oberflächen verwendet werden.

Geeignete Gitterabstände und Betrachtungswinkel vorausgesetzt, können vom Sichtwinkel abhängige Farbeffekte erzeugt werden. Hierzu werden vorzugsweise Mikro-Strukturierungen mit einem Gitterabstand von 1 bis 3 µm bei einem Sichtwinkel von 30° benutzt. Wie weiter unten hervorgehen wird, können diese Mikro-Strukturierungen mit den gröberen, Reflektionseffekte erzeugenden Makro-Strukturen gemäss WO 02/30661 kombiniert werden, wodurch sich dekorative Effekte erzeugen lassen, wie beispielsweise vom Betrachtungsort abhängige, rotierende und farblich variierende Punkte. Die Mikro-Strukturierungen können sich dabei über eine grössere Fläche und Länge erstrecken, d.h. über die Länge und Fläche der Zähne.

Bevor der Kern der Erfindung, die Mikro-Strukturierung der einzelnen Zähne der Walzen, im Einzelnen beschrieben wird, werden Beispiele von möglichen Walzen-Anordnungen beschrieben. Dabei wird ausdrücklich auf die verschiedenen Anordnungen in der WO 02/076716 Bezug genommen, wovon hier nur ein Beispiel gezeichnet ist. Im Rahmen dieser Beschreibung wird die durch den Antrieb der Vorrichtung angetriebene Walze die Prägewalze genannt, die auch die einzelnen Zähne aufweist, die die Satinierung hervorrufen und, wenn bearbeitet, die Prägung von Sicherheitsmerkmalen, Zeichen und Dekorationseffekten erzeugen. Die übrigen Walzen sind die Gegenwalzen. Insgesamt weist eine Vorrichtung Walzen auf, die Differenzierung wird dort vorgenommen, wo auf die Struktur der Walzen eingegangen wird.

Die einzelnen Zähne der Walzen können pyramidenstumpfförmig wie dargestellt, kegelstumpfförmig oder halbkugelförmig ausgebildet sein und eine Abflachung aufweisen.

Figur 1 zeigt einen Ausschnitt aus der Prägewalze 1 in einer sogenannten Pin up-Darstellung, d.h. die Zähne 2 der Prägewalze 1 stehen nach aussen, während die zweite Walze, die Gegenwalze 3, entsprechende Vertiefungen 4 aufweist. Die Walzen sind derart angeordnet, dass die Zähne der Prägewalze jeweils in die Vertiefungen der Gegenwalze greifen. Dabei kann eine Effektverstärkung dadurch hervorgerufen werden, dass nicht nur die herausragenden Zähne 2 abgeflacht sind, sondern komplementär dazu die Vertiefungen 4 weniger tiefe Böden aufweisen als für nicht abgeflachte Zähne.

Es gibt aber auch eine sogenannten Pin up-Pin up Variante, wobei je ein Zahn der Prägewalze zwischen vier Zähnen der Gegenwalze greifen. Diese Kombination wird meistens dann verwendet, wenn die angetriebene Prägewalze die Gegenwalze mitnimmt.

In dem Ausführungsbeispiel gemäss Figur 2 weist die Vorrichtung mit Antrieb 5 die angetriebene Prägewalze 1 und als erste Gegenwalze eine Walze 6 mit Ringen 7 auf, wie in der WO 02/076716 beschrieben. Die nachfolgende Gegenwalze 8 weist entweder eine identische Zahnung wie die Prägewalze 1 auf, das heisst die gleichen Zähne 2, deren Basis parallel und senkrecht zur Längsachse angeordnet sind oder, wie eingezeichnet, dazu komplementäre Vertiefungen 4.

Zur Erzeugung der Sonderprägungen kann es vorteilhaft sein, die Walzen 1 und 8 mit den Zähnen 2, bzw. Lücken 4, zwangs zu synchronisieren, wie dies in Figur 3 durch die Zahnräder G1 - G3 angedeutet ist, wobei die Zahnräder allgemein für Synchronisationselemente, die andere, an sich bekannte Synchronisationsmittel wie elektronische Bauelemente und dergleichen umfassen, stehen.

Als Variante zur Ausführung gemäss den Figuren 2 und 3 ist in den Figuren 2A und 2B die Synchronisierung der beiden Gegenwalzen 6 und 8 mit den Zahnriemenrädern G4 und G5 mittels eines Zahnriemens ZR dargestellt, während die Prägewalze 1 die Gegenwalzen antreibt.

Eine Zwangssynchronisierung ist besonders auch dann angebracht, falls sich das Material 9 beim Prägen stark verzieht. In den folgenden Darstellungen läuft das Materialband 9 so durch die Vorrichtung, dass deren zu prägende, metallisierte Oberfläche gegen die angetriebene Prägewalze 1 gerichtet ist.

Obwohl in den Beispielen der Figuren 2 und 3 sowie 2A und 3A alle oder zwei Walzen zwangssynchronisiert sind, kann auch der Betrieb gewählt werden, bei dem die angetriebene Prägewalze 1 ortsfest gelagert ist und die Gegenwalze mit Zähnen frei laufend und so gelagert ist, wie dies in der US-A-5 598 774 beschrieben ist. Aus dieser Druckschrift geht hervor, dass die Achsen der Walzen sowohl in Längsrichtung als auch/oder in Druckrichtung und/oder in Durchlaufrichtung des Materials auslenkbar sind. Dies ermöglicht eine Einstellung der Walzen, um ein genaues Ineinandergreifen der Zähne und damit ein einwandfreies Bearbeiten des Materials zu ermöglichen, ohne dieses zu zerknittern. Dies ist auch in der EP-A-0 925 911 des gleichen Anmelders beschrieben. Die Auslenkung der beweglich gelagerten Walzen kann durch Federkraft, pneumatisch oder mittels magnetischen Kräften eingestellt werden.

Im allgemeinen weist die angetriebene Prägewalze die Prägezähne auf, die wie nachfolgend beschrieben eine Makro-Struktur und/oder Mikro-Strukturierung aufweisen und die die Prägung und Satinierung erzeugen. Diese Prägezähne sind im allgemeinen Pin up Zähne. Die anderen Walzen, die Gegenwalzen, können die verschiedensten geometrischen Formen aufweisen, d.h. ebenfalls Pin-up Zähne, Pin-down Lücken, radiale Ringe 7, Längsrippen oder eine glatte Gummioberfläche. Es kann auch gegebenenfalls Folien geben, die es erfordern oder ermöglichen, dass die Strukturierungen nicht an der angetriebenen Walze sondern an einer Gegenwalze angebracht werden.

In den Figuren 4 - 6 ist eine in dieser Anmeldung Mikro-Strukturierung genannte Oberflächenbearbeitung der einzelnen Zähne und des Zahngrundes der angetriebenen Prägewalze 1 dargestellt. Figur 4 zeigt einen vergrösserten Ausschnitt aus einer Pin up Prägewalze 1 mit den Zähnen 2, wobei der in Figur 5 gezeichnete Ausschnitt P stark umrandet dargestellt ist. In Figur 5 sind sechs Zähne 2S1 bis 2S6 dargestellt, wobei die Mikro-Strukturierungen schraffiert dargestellt sind. Die Zähne sind pyramidenstumpfförmig mit rechteckigem Grundriss dargestellt, wobei die Seitenkanten parallel, bzw. senkrecht zur Längsachse der Walze ausgerichtet und die Pyramiden abgeflacht sind.

Zahn 2S1 weist eine Mikro-Strukturierung 20 auf dem abgeflachten Teil des Zahnes sowie eine Mikro-Strukturierung 21 an einer oder beiden Querseiten des Zahnes auf und Zahn 2S4 weist die gleiche Oberflächen-Strukturierung 20 und eine Mikro-Strukturierung 22 an einer oder beiden Längsseite(n) des Zahnes auf. Der Zahngrund ZG kann eine Mikro-Strukturierung 23 längs der Längsseite der Zähne oder eine Mikro-Strukturierung 24 über gewisse Längen oder eine Mikro-Strukturierung 25 quer dazu aufweisen.

Zahn 2S2 weist an einer oder beiden Längsseiten eine Mikro-Strukturierung 26 auf, die sich über die ganze Seite erstreckt, und Zahn 2S3 weist eine Mikro-Strukturierung 27 auf, die sich über die ganze Oberfläche des abgeflachten Teils erstreckt. Die Zähne 2S5 und 2S6 weisen eine nur schmale Mikro-Strukturierung 28 über die Höhe der Längsseite oder eine Mikro-Strukturierung 29 entlang der Querseite auf. Davon ausgehend können selbstverständlich eine Vielfalt von Mikro-Strukturierungen angebracht werden, die eine ebenso grosse Vielfalt von Mustern auf der Folie ergeben.

In den Figuren 6A - D sind in einer starken Vergrösserung einige Beispiele von möglichen geraden oder gekrümmten Mikro-Strukturen auf und an den Zähnen angegeben. In Figur 6A ist im Querschnitt eine positive Gitterstruktur dargestellt, wobei die einzelnen Stege 30 einen Abstand von einigen µm aufweisen. Diese Struktur kann sich bei irgendeiner der Mikro-Strukturierungen 20, 21, 28 oder 29 befinden, aber auch auf dem Zahngrund angebracht sein, z.B. bei den Mikro-Strukturierungen 23, 24 oder 25.

In Figur 6B ist im Querschnitt eine negative Gitterstruktur angedeutet, wobei die Vertiefungen 31 ebenfalls einen Abstand von einigen µm voneinander haben.

In Figur 6C ist in perspektivischer Sicht eine mögliche positive Mikro-Struktur mittels gitterartigen, gekrümmten Stegen 32 angedeutet.

In Figur 6D ist in perspektivischer Sicht eine mögliche negative Mikro-Struktur mittels gitterartigen, gekrümmten Nuten 33 angedeutet. Diese Struktur ist beispielsweise geeignet, bei der Mikro-Strukturierung 24 oder 25 Verwendung zu finden.

Es ist von diesen wenigen Beispielen ausgehend einleuchtend, dass eine sehr grosse Variationsbreite sowohl der Mikro-Strukturierungen, bzw. Verteilung der Mikro-Strukturierungen auf den einzelnen Zähnen und auf dem Zahngrund oder nur auf dem Zahngrund allein, als auch der Art der Mikro-Strukturierungen selber möglich ist. Dies hängt vom jeweiligen Stand der Technik zur Herstellung dieser Strukturen ab, wobei die Herstellung von Mikro-Strukturen insbesondere auch bei der Herstellung von elektronischen Chips Anwendung findet und von dort bekannt ist. Bei solch feinen Mikro-Strukturen spielt die Verwendung von geeigneten Verfahren wie Lack- oder Ätztechniken eine grosse Rolle.

In Figur 7 ist der gleiche Prägewalzenteil 1 wie in Figur 4 dargestellt, mit den Zähnen 2 und dem Ausschnitt P. Die Zähne von Figur 8 weisen sowohl eine Makro-Struktur als auch eine Mikro-Strukturierung auf. Dabei wird unter Makro-Struktur die Veränderung der Zahngeometrie verstanden, während sich die Mikro-Strukturierung auf die Oberflächenveränderung der Zähne bezieht.

In Figur 8 erkennt man drei geometrisch unveränderte Zähne 2S1, 2S4 und 2S6, jedoch mit den Mikro-Strukturierungen wie in Figur 5 sowie die Zähne 2M1, 2M2 und 2M3, wobei das "M" für Makro-Struktur steht. Der Zahn 2M1 weist eine grössere Abflachung auf als ein normaler Zahn, beispielsweise 2S1, wobei auf dem abgeflachten Teil eine Mikro-Strukturierung 20 angebracht ist.

Der Zahn 2M2 weist nur eine grössere Abflachung auf und ist sonst unverändert, während der Zahn 2M3 in seiner Breite halbiert worden ist. Selbstverständlich können auch die Zähne 2M2 und 2M3 Mikro-Strukturierungen aufweisen. Auch im Beispiel gemäss Figur 8 kann der Zahngrund bearbeitet sein und dieselbe Mikro-Strukturierung 23 wie in Figur 5 und eine Mikro-Strukturierung 25 aufweisen. Aus der Darstellung von Figur 8 ergibt sich eine noch grössere Vielfalt von Veränderungsmöglichkeiten von Zähnen, um eine sehr grosse Vielfalt von Prägemustern zu erhalten. Dabei können auch nur die Strukturierungen des Zahngrundes allein zur Prägung verwendet werden.

Für die Erzeugung der Mikro-Strukturierungen auf den Zähnen und auf dem Zahngrund sind einige Gesichtspunkte zu beachten. So muss ein für die Bearbeitung geeignetes Material mit geeigneter Struktur ausgesucht werden mit einer Oberflächenrauhigkeit, die sich nicht störend auf den Abdruck der Mikro-Strukturierungen auswirkt. Das heisst mit anderen Worten, dass nur Grundmaterialien für die Prägewalze in Frage kommen, deren Körnung z.B. die Integrität und Oberflächengüte solcher Gitter nicht wesentlich stört. Diese Materialien können von einem Fachmann ausgewählt werden und die Mikro-Strukturen und -Strukturierungen können z.B. mittels Lithographie oder anderen substraktiven oder additiven Verfahren erzeugt werden.

Es ist nicht nur möglich, bei der Pin up-Pin down Konfiguration die Vertiefungen entsprechend den Abflachungen der Zähne weniger tief zu gestalten sondern auch komplementäre Makro-Strukturen und/oder Mikro-Strukturierungen in den Vertiefungen vorzusehen.

In den Figuren 9 und 10 ist in einer starken Vergrösserung und Schematisierung eine auf einer Folie aufgeprägte Makro-Struktur, bzw. Mikro-Strukturierung dargestellt, wobei mit dieser Struktur Farbeffekte erzeugt werden können. Als Prägematerialien werden in der Tabakindustrie üblichen Materialien verwendet, wie z.B. Alu-Papier, bestehend aus einer Aluminiumschicht von 6 µm und einem Faservolumen von 50 µm oder metalisierte Innerliner, im Wesentlichen aus einer Papierfaserstruktur von 10-100 µm Dicke und einer feinen Schicht von aufgedampftem Metall mit einer Dicke von einigen 100 Å bestehend, die selbst durch eine ebenfalls sehr feine Plastikschicht geschützt ist.

In der Verpackungsindustrie für Lebensmittel sind noch andere Materialien üblich, wie z.B. mehrschichtiges Material, mit einem Schichtaufbau mit einer ganz- oder teilflächig geprägten Metallfolie oder metallisierte Kunststofffolien mit einer darüberliegenden, zumindest in Teilbereichen transparenten, ein- oder mehrlagigen Kunststoffschicht. Als Metallfolien können z.B. Eisen-, Stahl-, Kupfer-, Silber-, Gold- und insbesondere Aluminiumfolien benutzt werden. Die Kunststoffschicht kann transparent oder in Teilbereichen transparent sowie gefärbt oder grau sein. Die Kunststoffschicht kann ein- oder mehrlagig sein und es können Thermoplaste, Polyamide, PVC, Polypropylen, Polyester und dergleichen verwendet werden.

Für die Güte der Prägung sind viele Faktoren verantwortlich, z.B. der Ort und die Art der Mikrostrukturierung, die Art Papier und deren Metallschicht, der spezifische Druck der Walzen bei den Prägestellen und dergleichen mehr.

Im Beispiel gemäss Figur 9 wird angenommen, dass die Flanken 34 der geprägten Pyramidenstrukturen auf der Folie 35 spiegelnde Ebenen mit einer Neigung von 30° sind. Um mit diffraktiven Elementen Farbeffekte zu erzielen, braucht es eine dominante Einfallsrichtung des Lichtes, die zusammen mit dem Betrachtungswinkel die wahrgenommene Farbe bestimmen.

In Figur 9 ist eine mögliche Konfiguration gezeigt, bei der der Betrachter, symbolisiert durch das Auge 36, die Folie waagrecht hält und unter einem Winkel von ca. 30° zur senkrechten Geraden betrachtet. Das Licht, symbolisiert durch die Sonne 37, fällt von vorne unter einem dominanten Winkel von 30° ein. Gemäss der Beugungsformel sin α = λ/Λ ergibt sich für grünes Licht mit λ = 0,55 µm ein optimaler Gitterabstand Λ ≈ 0,7 µm. Voraussetzung für das Auftreten eines nutzbaren Farbeffektes ist, dass der diffraktive Effekt, d.h. die Winkeldispersion, grösser ist als beispielsweise die durch die Satinierung erzeugt diffuse Streuung.

In Figur 10 ist ein schwer nachzumachendes Identifikationsmerkmal dargestellt, in dem nur ganz bestimmte Flanken 38 der Folie 35 mit Gittern belegt werden, wodurch beim Drehen um 180 Grad der Farbeffekt verschwindet.

In Figur 11 ist ein Beispiel einer makrostrukturierten Folie 9 dargestellt. Bei senkrechter oder steiler Betrachtung, mit den Pfeilen X1 oder X3 symbolisiert, sind alle Pyramiden P1 bis P6 sichtbar. Bei flacher Betrachtung, beispielsweise aus der Richtung X2, verschwinden die Pyramiden P2, P4 oder P5 langsam, wodurch Abdunklungseffekte erreicht werden können.

Figur 12 zeigt einen Ausschnitt aus einer satinierten Folienoberfläche 9, auf welcher der Buchstabe H wie folgt ausgebildet ist: die Abdrücke 11-15 sowie 111-115 stammen von Zähnen, die gemäss dem Prinzip von Figur 9 auf einer Seitenfläche eine Mikro-Strukturierung aufweisen. Zahn 013 ist hier Abdruck eines makroveränderten Zahnes, während die übrigen Abdrücke 011, 012, 014 und 015 von unveränderten Zähnen stammen.In der Draufsicht sind alle Abdrücke des Ausschnittes als satinierte Oberfläche sichtbar.

Unter einem schiefen Winkel aus Richtung Z sehend, ist H voll sichtbar mit zwei parallelen, farbigen Balken und einem abgedunkelten Verbindungsbalken. Jedoch aus den Richtungen X und Y betrachtet, ist H nicht sichtbar. Bei 013 hingegen ist eine Abdunklung feststellbar.

Wie weiter oben angedeutet, ist durch diese Technik eine sehr grosse Vielfalt von Prägungen mit Mustern, Buchstaben, Ziffern und dergleichen möglich, wobei die schwer nachzumachenden Mikroeffekte eine hologrammähnliche Struktur ergeben, die dem Hersteller die Möglichkeit geben, die verschiedensten Sicherheitsmerkmale in einer (einzigen) mechanischen Prägung in situ, ohne Verwendung einer komplizierten Technologie, herzustellen.

Aus Obigem geht hervor, dass durch die Verwendung von mikroskopischen Strukturierungen im Submikrometer- bis 30 Mikrometer-Bereich, die der Satinierung überlagert werden, im mechanischen Prägeprozess hologrammähnliche Effekte oder Kontraste erzeugt werden können, die ähnlich wie Etiketten oder Siegelstreifen mit Hologrammen eine unverfälschliche Herkunftsbezeichnung einerseits und effektvolle Dekorationen andererseits ermöglichen.

## Patentansprüche

1. Vorrichtung zum Satinieren und Prägen von Flachmaterial mit einer Prägewalze (1) und mindestens einer Gegenwalze (6, 8), wobei die Walzen mit einem Antrieb (5) verbunden und einzeln oder gemeinsam antreibbar und nachgiebig gegeneinander anpressbar sind und die einzelnen Zähne der Walzen abgeflacht sind, und die Prägezähne derart ausgebildet sind, dass sie beim Durchlauf des Flachmaterials (9) an diesen Stellen geprägte Zeichen erzeugen, deren Erscheinungsbild sich je nach Blickwinkel des Betrachters und/oder Art und/oder Standort der Beleuchtungsquelle ändert, wobei die, die sich ändernden Zeichen erzeugenden Prägezähne eine andere geometrische Form und/oder Oberfläche aufweisen als die für die Satinierung vorgesehenen Satinier-Zähne, **dadurch gekennzeichnet, dass** die Oberfläche der Prägezähne (2S1 - 2S6; 2M1 - 2M3) und/oder Stellen des Zahngrundes (ZG) der Prägewalze (1) mit Mikro-Strukturierungen (20-22, 26 - 33; 23 - 25) versehen sind.

2. Vorrichtung nach Anspruch 1, **dadurch gekennzeichnet, dass** die Mikro-Strukturierungen gitterartig angeordnete Stege (30, 32) oder Nuten (33) enthalten, die einen Abstand voneinander von unter einem Mikrometer bis 30 Mikrometer aufweisen.

3. Vorrichtung nach Anspruch 1 oder 2, **dadurch gekennzeichnet, dass** die geometrisch veränderten Prägezähne (2M1 - 2M3) eine geringere Höhe aufweisen als die übrigen Zähne.

4. Vorrichtung nach einem der Ansprüche 1 bis 3, **dadurch gekennzeichnet, dass** die geometrisch veränderten Prägezähne (2M1 - 2M3) eine andere Flanken- oder Kantenform aufweisen als die übrigen Zähne.

5. Vorrichtung nach einem der Ansprüche 1 bis 4, **dadurch gekennzeichnet, dass** die Prägezähne auf der angetriebenen Prägewalze (1) angeordnet sind.

6. Vorrichtung nach einem der Ansprüche 1 bis 5, mit zwei Walzen, **dadurch gekennzeichnet, dass** die Prägewalze (1) eine aus einzelnen Zähnen (2) bestehende Verzahnung und die Gegenwalze (6) eine Oberflächenstruktur ohne einzelnen Zähne aufweist.

7. Vorrichtung nach einem der Ansprüche 1 bis 5, mit zwei Walzen, denen eine weitere Walze nachgeschaltet ist, **dadurch gekennzeichnet, dass** die Prägewalze (1) eine aus einzelnen Zähnen (2) bestehende Verzahnung und mindestens eine Gegenwalze (6) eine Oberfläche ohne einzelnen Zähne aufweist.

8. Vorrichtung nach Anspruch 6 oder 7, **dadurch gekennzeichnet, dass** die Gegenwalze (6) Ringe (7) aufweist.

9. Vorrichtung nach einem der Ansprüche 1 bis 8, **dadurch gekennzeichnet, dass** Walzen über Synchronisationsmitteln (G1 - G3; G4, G5, ZR) miteinander synchronisiert sind.

10. Vorrichtung nach einem der Ansprüche 1 bis 9, **dadurch gekennzeichnet, dass** mindestens eine der Gegenwalzen derart gelagert ist, dass sie in Längsrichtung der Achse und/oder in der Anpressrichtung und/oder in der Laufrichtung der Folie (9) auslenkbar ist, wobei die Auslenkung durch Federkraft, pneumatisch oder magnetisch einstellbar ist.

11. Vorrichtung nach einem der Ansprüche 1 bis 10, **dadurch gekennzeichnet, dass** bei einer Pin up-Pin down Konfiguration die Vertiefungen (4) an der Gegenwalze (3, 8) entprechend der abgeflachten Zähne (1) weniger tief sind.

12. Anordnung nach Anspruch 11, **dadurch gekennzeichnet, dass** die Vertiefungen (4) zu den Prägezähnen (2) komplementäre Makro-Strukturen und/oder Mikro-Strukturierungen aufweisen.

13. Vorrichtung nach einem der Ansprüche 1 bis 12, **dadurch gekennzeichnet, dass** mindestens eine der Walzen in einer Wechseleinheit enthalten ist, die in das Lagergestell einsetzbar ist.

14. Vorrichtung nach Anspruch 13, **dadurch gekennzeichnet, dass** die Walzen einzeln, in Gruppen oder gemeinsam in einer Wechseleinheit angeordnet sind.

15. Mit einer Vorrichtung nach einem der Ansprüche 1 bis 14 hergestellte, metallisierte und/oder reflektierenden Verpackungsfolie, wobei sie eine Satinierung und auf diesem satinierten Hintergrund eine Mikro-Strukturierung (34, 38) aufweist, dessen Intensität und Farbe sich je nach Betrachtungswinkel und/oder Art der Mikrostrukturierung und/oder Art und/oder Standort der Beleuchtungsquelle ändert.

16. Verpackungsfolie nach Anspruch 15, **dadurch gekennzeichnet, dass** es sich um eine Folie (9) für die Verpackung von Tabakwaren handelt.

17. Verfahren zum Betrieb der Vorrichtung gemäss den Ansprüchen 1 bis 14, **dadurch gekennzeichnet, dass** die Folie gleichzeitig satiniert und geprägt wird.
